# EUROPÄISCHE PATENTSCHRIFT

(11) **EP 1 265 777 B1**
(45) Veröffentlichungstag und Bekanntmachung des Hinweises auf die Patenterteilung: **04.01.2006**
(21) Anmeldenummer: 01915382.4
(22) Anmeldetag: 20.03.2001
(51) Int. Cl.: B62D 25/04, B60R 22/02

(54) **STRUKTURELEMENT ZUR MONTAGE AN EINER FAHRZEUGSTRUKTUR**
STRUCTURAL ELEMENT FOR MOUNTING ON A VEHICLE STRUCTURE
ELEMENT STRUCTUREL A MONTER SUR UNE STRUCTURE DE VEHICULE

(30) Priorität: 21.03.2000 DE 20005145 U
(43) Veröffentlichungstag der Anmeldung: 18.12.2002
(73) Patentinhaber: ACTS-Advanced Car Technology Systems GmbH & Co.KG, 63877 Sailauf (DE)
(72) Erfinder: SCHÜTT, Stephan, 63773 Goldbach (DE); ZIEGLOWSKI, Martin, 63875 Mespelbrunn (DE); EDO ROS, Manel, 63741 Aschaffenburg (DE)
(74) Vertreter: Pfiz, Thomas
(86) Internationale Anmeldenummer: PCT/EP2001/003151
(87) Internationale Veröffentlichungsnummer: WO 2001/070557

(56) Entgegenhaltungen:
- DE-A- 1 680 020
- DE-A- 3 307 093
- DE-A- 4 327 717
- DE-A- 4 341 119
- PATENT ABSTRACTS OF JAPAN vol. 1999, no. 09, 30. Juli 1999 (1999-07-30) & JP 11 091506 A (NISSAN DIESEL MOTOR CO LTD), 6. April 1999 (1999-04-06)

## Beschreibung

Die Erfindung betrifft ein Strukturelement zur Montage an einer Fahrzeugstruktur, insbesondere im Bereich der B-Säule. Die Erfindung betrifft weiter eine Fahrzeugstruktur mit einem entsprechenden Strukturelement und ein Verfahren zu deren Montage.

Üblicherweise sind an der B-Säule eines Fahrzeugs die Funktionsteile eines Sicherheitsgurtsystems für den Fahrer- bzw. den Beifahrersitz befestigt. Diese Funktionsteile umfassen im allgemeinen wenigstens einen Gurtaufroller, einen Umlenkbeschlag und eine Befestigungslasche. Bei der Montage dieser Funktionsteile an der B-Säule ist ein relativ hoher Aufwand erforderlich, wenn jedes dieser Teile einzeln ausgerichtet und befestigt wird. Zur Vereinfachung der Montage wurde beispielsweise in der gattungsgemäßen DE 43 41 119 A1 vorgeschlagen, die Funktionsteile an einer am Fahrzeug zu montierenden Trägereinheit verschiebbar anzuordnen. Am Fahrzeug sind Befestigungselemente in Form von Vorsprüngen und Rasten vorgesehen, mit deren Hilfe sich die Funktionsteile an der fahrzeugfesten B-Säule verhaken oder verrasten können. Bei der Montage wird dann die Trägereinheit mit den Funktionsteilen an der B-Säule angebracht und verschoben. Durch die Verschiebung der Trägereinheit verhaken oder verrasten die Funktionsteile in den Befestigungselementen, so daß sie in kraftschlüssiger Verbindung mit der fahrzeugfesten B-Säule stehen. Nachteilig bei dieser Lösung ist, daß entsprechend der Anzahl der anzubringenden Funktionsteile an der B-Säule mindestens ebenso viele Befestigungselemente vorzusehen sind. Diese müssen mit der notwendigen Genauigkeit hergestellt sein, damit gewährleistet ist, daß die Funktionsteile bei der Montage sicher befestigt werden. Außerdem muß bei jeder Änderung der Anordnung der Funktionsteile auch die B-Säule verändert werden.

Der Erfindung liegt daher die Aufgabe zugrunde, die vorgenannten Nachteile zu vermeiden und die Montage einer Fahrzeugstruktur und insbesondere die Montage der Funktionsteile eines Sicherheitsgurtsystems am Kraftfahrzeug weiter zu vereinfachen.

Zur Lösung dieser Aufgabe wird die im Patentanspruch 1 bzw. 13 angegebene Merkmalskombination vorgeschlagen. Vorteilhafte Ausgestaltungen und Weiterbildungen der Erfindung ergeben sich aus den abhängigen Ansprüchen.

Erfindungsgemäß ist ein Strukturelement zur Montage an einer Fahrzeugstruktur, insbesondere im Bereich der B-Säule, vorgesehen, mit einem lasttragenden Trägerelement, Verkleidungsteilen und Funktionsteilen eines Sicherheitsgurtsystems, die am Trägerelement befestigt sind Dies hat den Vorteil, daß beim Einbau des Sicherheitsgurtsystems im Fahrzeug nur noch das Trägerelement befestigt werden muß. Alle Funktionsteile können bereits bei der Vormontage außerhalb des Fahrzeugs mit der erforderlichen Genauigkeit ausgerichtet, befestigt und auf ihr ordnungsgemäßes Zusammenwirken geprüft werden.

Gemäß einer Ausführungsform der Erfindung sind an der Fahrzeugstruktur Fixiermittel vorgesehen, welche das Strukturelement in einer Ebene senkrecht zur Montagerichtung festlegen. Auf diese Weise entfallen bei der Montage auch die Ausrichtarbeiten für das Trägerelement. Das Trägerelement muß nur noch befestigt werden.

Eine besonders bevorzugte Ausführungsform bzw. Variante der Erfindung sieht vor, daß das Trägerelement die gesamte B-Säute bildet. Dabei ist es weiter von Vorteil, wenn die außerhalb des Fahrzeugs vormontierbare B-Säule Befestigungselemente zu ihrer Befestigung zwischen einem Dachrahmen und einem seitlichen Längsträger des Fahrzeugs bei dessen Endmontage aufweist. Dies hat den besonderen Vorteil, daß vor der Montage des Trägerelements in der Seite des Fahrzeugs eine sehr große Öffnung bleibt. Dies gestattet es, große Teile der Innenausstattung, beispielsweise den Dachhimmel oder das Cockpit, sehr viel leichter in das Fahrzeuginnere einzubauen als bei Fahrzeugen mit B-Säule.

In verfahrensmäßiger Hinsicht wird die eingangs genannte Aufgabe dadurch gelöst, daß das Trägerteil als gesamte B-Säule außerhalb des Fahrzeugs vormontiert wird, und daß vor dem Einsetzen der B-Säule sperrige Innenausstattungsteile wie Cockpit, Sitze oder Dachhimmel durch die von der B-Säule freigehaltene Karosserieöffnung hindurch in das Fahrzeuginnere verbracht werden.

Weitere Ausgestaltungen und Vorteile der Erfindung ergeben sich aus der nachfolgenden Beschreibung unter Bezug auf die beigefügten Zeichnungen, in welchen zeigen:
Fig. 1 eine Ansicht einer ersten Ausführungsform des erfindungsgemäßen Strukturelements;
Fig. 2 bis 5 einen Querschnitt durch das Strukturelement aus Fig. 1 entlang der Linie II-II bis V-V in Fig. 1;
Fig. 6 einen Längsschnitt durch eine zweite Ausführungsform eines erfindungsgemäßen Strukturelements;
Fig. 7 und 8 einen Montageablauf beim Einbau einer vorgefertigten B-Säule in eine Fahrzeugstruktur in einer schematisch vereinfachten ausschnittsweisen Seitenansicht.

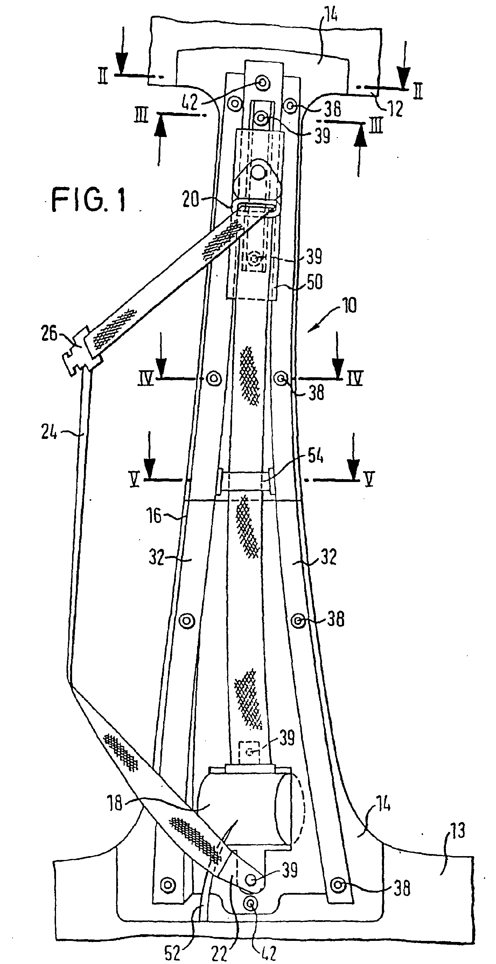

Fig. 1 zeigt ein erfindungsgemäßes Strukturelement 10, das an einer Fahrzeugstruktur im Bereich der B-Säule zwischen einem Dachrahmen 12 und einem seitlichen Längsträger 13 montiert ist. Das Strukturelement 10 besteht aus einem lasttragenden Trägerelement 16, an dem Funktionsteile für ein Sicherheitsgurtsystem und ein Verkleidungsteil 14, das in Fig. 1 nur durch seinen Umriß, hier aufgeteilt in Ober- und Unterteil, schematisch angedeutet ist, befestigt sind. Das Sicherheitsgurtsystem umfaßt einen Gurtaufroller 18, einen höhenverstellbaren Umlenkbeschlag 20, eine Befestigungslasche 22 und einen Sicherheitsgurt 24 mit einer Steckzunge 26.

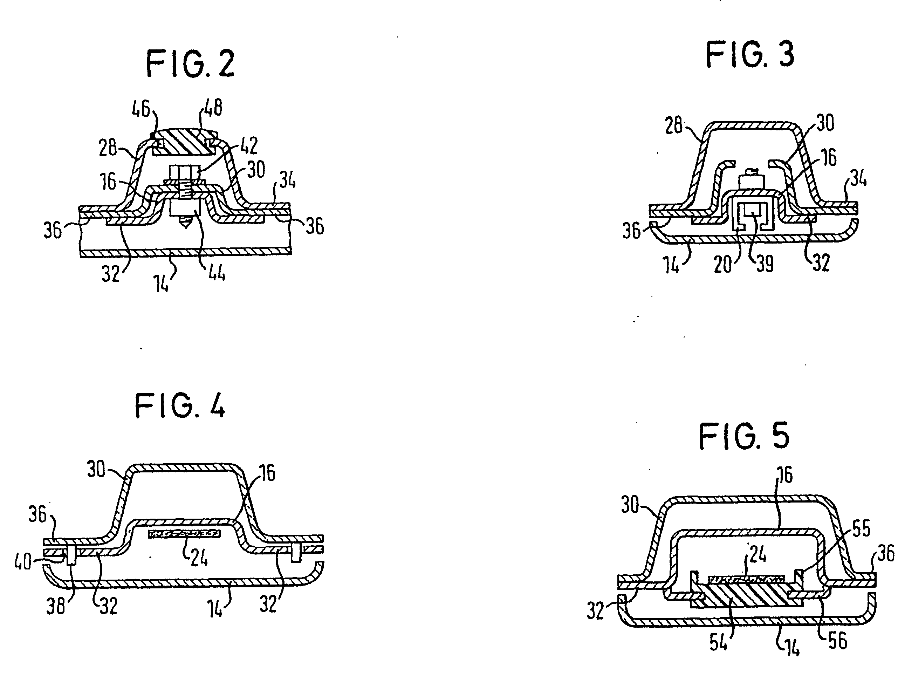

Die Fahrzeugstruktur besteht, wie in den Figuren 2 und 3 zu sehen ist, im Bereich der B-Säule aus einer der Fahrzeugaußenseite zugewandten Au-ßenwand 28 und einer der Fahrzeuginnenseite zugewandten Innenwand 30, die beide einen im wesentlichen ähnlichen Querschnitt in Form eines U mit rechtwinklig abstehenden Flanschen 34 bzw. 36 aufweisen, wobei die Öffnung des "U" zur Fahrzeuginnenseite zeigt. Der U-förmige Teil des Querschnitts wird vom Dachrahmen 12 zum seitlichen Längsträger 13 hin breiter und ist bei der Außenwand 28 größer als bei der Innenwand 30, so daß sich die beiden Wände 28, 30 nur im Bereich der Flanschflächen 34 und 36 berühren. Auf der zur Fahrzeuginnenseite weisenden Seite der Flanschflächen 34 und 36 der Innenwand 30 sind Fixiermittel in Form von Bolzen 38 (Fig. 1, 4) vorgesehen, deren Zweck später erläutert wird.

In den Figuren 4 und 5 ist für eine bessere Übersicht die Außenwand 28 weggelassen. Wie in den Querschnitten in den Figuren 2 bis 5 zu sehen ist, besteht das Trägerelement 16 aus einem nach unten hin breiter werdenden U-Profil mit rechtwinkelig abstehenden Flanschen 32 an den Enden der Profilschenkel. Der Querschnitt des Trägerelements 16 ist so bemessen, daß der U-förmige Teil des Querschnitts von dem U- förmigen Teil des Querschnitts der Innenwand 30 umschlossen wird, wobei zwischen Innenwand 30 und Trägerelement 16 soviel Spiel bleibt, daß nur die Flansche 32 des Trägerelements 16 an den Flanschen 36 der Innenwand anliegen. In den Flanschen 32 sind Bohrungen 40 vorgesehen, in welche die Bolzen 38 eingreifen (Fig. 4), um das Trägerelement 16 in der Ebene der Flansche zu fixieren. An den Enden des Trägerelements 16 sind Muttern 44 (siehe Fig. 2) eingepreßt. Das Trägerelement 16 ist mittels Schrauben 42, welche durch Bohrungen in der Innenwand 30 hindurchgesteckt und in die Muttern 44 eingeschraubt sind, an der B- Säule befestigt. Damit die Schrauben 42 zugänglich sind, sind in der Außenwand 28 der B-Säule Öffnungen 46 vorgesehen (Fig. 3), welche nach der Montage des Strukturelements 10 mit einem Stopfen 48 verschlossen werden können.

Die Funktionsteile des Sicherheitsgurtsystems, nämlich Gurtaufroller 18, Umlenkbeschlag 20 und Befestigungslasche 22, sind bereits vor der Montage des Strukturelements 10 an der Fahrzeugstruktur am Trägerelement 16 ausgerichtet und mittels Rasten und Schrauben 39 (Fig. 1, 3) befestigt. Der Sicherheitsgurt 24 ist an einem Ende im Gurtaufroller 18 aufgerollt. Er ist über den Umlenkbeschlag 20, durch einen Schlitz in einer höhenverstellbaren Blende 50 im oberen Bereich des Verkleidungsteiles 14 und einen Schlitz 52 in dessen unterem Bereich geführt und an seinem anderen Ende an der Befestigungslasche 22 befestigt. Das Verkleidungsteil 14 kann vorteilhaft mittels Klipsen, durch Aufstecken oder durch Aufschieben am Trägerteil 16 befestigt sein.

Zum Einbau im Fahrzeug wird das Trägerelement 16 in der Montagerichtung, also senkrecht zur Ebene der Flansche 32, auf die B- Säule so aufgesetzt, daß die Bolzen 38 in die Bohrungen 40 eingreifen und dadurch das Trägerelement 16 quer zur Montagerichtung fixieren. Anschließend wird das Trägerelement 16 mittels der Schrauben 42 befestigt, und die Öffnungen 46 werden mit den Stopfen 48 verschlossen.

Etwa in der Mitte des Trägerelements 16 ist ein Führungselement 54 für den Sicherheitsgurt vorgesehen (Fig. 5). Das Führungselement 54 besteht aus einem Steg, vorteilhafterweise aus Kunststoff, der mit zwei Blechlaschen 56 an den Flanschen 32 des Trägerelements befestigt ist. Auf der dem Tägerelement 16 zugewandten Seite ist der Steg 54 mit Anschlägen 55 versehen, damit der Gurt 24 nicht vom Steg abrutscht. Das Führungselement 54 verhindert, daß der Gurt 24 bei der Montage zwischen den Flanschen 36 und 32 eingeklemmt wird. Außerdem wird durch die Führung des Gurtes 24 verhindert, daß die Gurtkanten im Betrieb durch Scheuem an dem Trägerelement 16 beschädigt werden. Weiterhin wird dadurch der Gurt bei einem Frontcrash in Position gehalten, um zusätzliche Gurtlose zu vermeiden. Schließlich verhindert das Führungselement 54, daß der Gurt 24 das Verkleidungsteil 14 vom Trägerelement 16 wegdrückt. Die B-Säule und daher auch das Trägerelement sind nämlich meist leicht zur Fahrzeuginnenseite hin gewölbt. Wenn der Gurt 24 unter Zugspannung gestrafft wird, etwa durch einen Gurtstraffer oder infolge der Belastung durch einen zurückzuhaltenden Fahrzeuginsassen, erstreckt sich der Gurt zwischen Aufroller 18 und Umlenkbeschlag 20 auf dem kürzesten Weg, nämlich auf einer Geraden. Ohne das Führungselement 54 würde sich der Gurt 24 daher in diesem Bereich von dem Trägerelement entfemen und gegen das Verkleidungsteil 14 drücken, wodurch sich dieses vom Trägerelement lösen könnte.

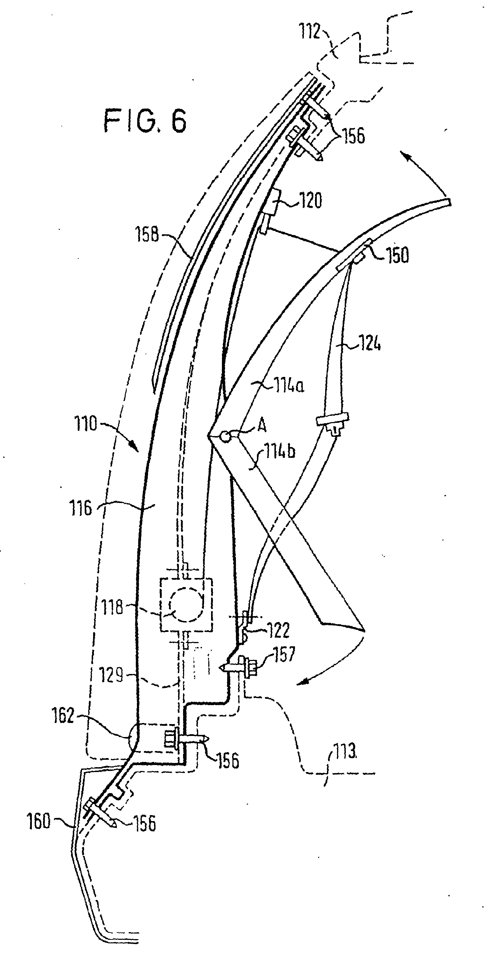

In Fig. 6 ist ein Strukturelement 110 gemäß einer zweiten Ausführungsform der Erfindung zu sehen. Dieses Strukturelement 110 besteht aus einem Trägerelement 116, welches die gesamte B-Säule zwischen Dachrahmen 112 und seitlichem Längsträger 113 einer Fahrzeugstruktur bildet. Das Trägerelement 116 besteht im wesentlichen aus einem Hohlprofil, das mit einer zusätzlichen Zwischenwand 129 in Längsrichtung versehen ist. Die Stimflächen des Trägerelements 116 sind an die Querschnitte von Dachrahmen 112 und seitlichem Längsträger 113 angepaßt, damit zwischen den Bauteilen möglichst große Kontaktflächen zur Kraftübertragung bestehen. An dem Trägerelement 116 sind ein Gurtaufroller 118, ein höhenverstellbarer Umlenkbeschlag 120 und eine Befestigungslasche 122 befestigt. Außerdem sind am Trägerelement 116 ein oberes und ein unteres Verkleidungsteil 114a, 114b angebracht, die beide um eine gemeinsame horizontale Achse A etwa in der Mitte des Trägerelements 116 schwenkbar sind und somit vom Trägerelement abgeklappt werden können. In einer anderen Ausführungsform könnten die Verkleidungsteile so gestaltet sein, daß sie durch Verschieben in Z-Richtung ihre endgültige Position durch Einrasten erreichen. Im oberen Verkleidungsteil 114a ist eine Blende 150 mit einem Schlitz vorgesehen, durch den der Sicherheitsgurt 124 geführt ist. Die Blende 150 ist am Verkleidungsteil 114a verschiebbar, so daß der Schlitz für den Gurt an die Einstellung des höhenverstellbaren Umlenkbeschlages angepaßt werden kann. Die Funktionsteile 118, 120, 122 und die Verkleidungsteile 114a, 114b sowie der Gurt 124 selbst sind vor dem Einbau des Strukturelements 110 in die Karosserie komplett montiert.

Vor dem Einbau des Strukturelements 110 bilden die vordere und die hintere Türöffnung wegen der fehlenden B-Säule gemeinsam eine große Öffnung in der Fahrzeugkarosserie. Durch diese große Öffnung können nun sperrige Innenausstattungsteile wie Dachhimmel oder Cockpit, die bisher umständlich durch die Front- oder Heckscheibenöffnung manövriert werden mußten, viel einfacher in das Fahrzeuginnere verbracht werden.

Beim Einbau wird das Strukturelement 110 in der Fahrzeugstruktur 112 bzw. 113 eingesetzt und mit Schrauben 156 von der Außenseite und mit Schrauben 157 von der Innenseite her am Dachrahmen 112 und am seitlichen Längsträger 113 verschraubt. Das Strukturelement 110 kann dabei infolge seiner stabilen Bauweise durchaus auch für die Fahrzeugstruktur eine lasttragende Funktion übernehmen. Die beiden Verkleidungsteile 114a, 114b werden an das Trägerelement angeklappt und dort beispielsweise von Klipsen gehalten. Die Verkleidungsteile decken dann gemeinsam das gesamte Strukturelement 110 einschließlich der Übergänge zwischen Fahrzeugstruktur und B-Säule und eventuell noch sichtbarer Befestigungsschrauben 157 zur Fahrzeuginnenseite hin ab. Die Köpfe der Schrauben 156 sind im Bereich des Dachrahmens 112 nach der Montage durch eine Blende 158 verdeckt. Im Bereich des seitlichen Längsträgers 113 sind die Schraubenköpfe durch eine Schwellerblende 160 und durch Abdeckstopfen 162 verdeckt.

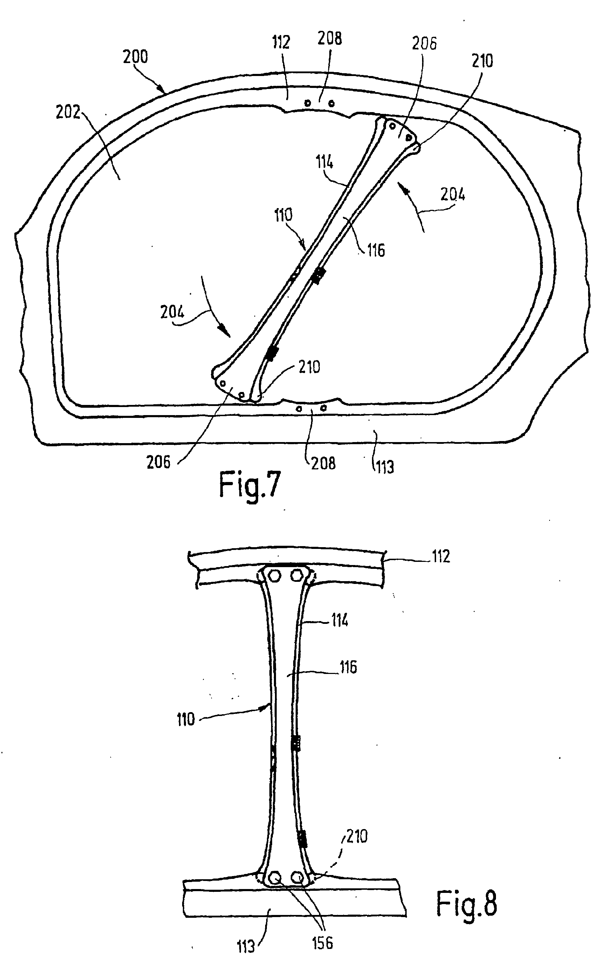

Bei der in Fig. 7 und 8 gezeigten Ausführungsform einer B-Säule 110 ist neben den Sicherheitsgurt-Funktionsteilen das Verkleidungsteil 114 fest an dem Trägerteil 116 fixiert. Zum Einbau in die Fahrzeugkarosserie 200 eines Personenkraftwagens kann die B-Säule 110 in der Ebene der freigehaltenen Karosserieöffnung 202 im Bereich der vorderen und hinteren Tür in Richtung der Pfeile 204 seitlich verschwenkt werden, bis die Säulenenden 206 an den zugeordneten Flanschen 208 am Dachrahmen 112 bzw. Schweller 113 anliegen. Dabei gelangen die den Montagebereich der B-Säule fahrzeuginnenseitig überlappenden Endabschnitte 210 der Verkleidung 114 ohne Störkonturen in ihre vorgesehene Position, so daß neben dem Trägerelement 116 auch die Übergänge zu der Karosserie 200 nebst eventuell noch sichtbarer Befestigungsmittel 156 zur Fahrzeuginnenseite hin abgedeckt werden. Alternativ ist es auch denkbar, daß die B-Säule durch endseitiges Ansetzen eines ihrer Säulenenden und Beischwenken des anderen Säulenendes in Y-Richtung des Fahrzeugs in die Karosserie 200 eingesetzt wird.

Mit der beschriebenen Erfindung kann die Montage eines Sicherheitsgurtsystems in einem Fahrzeug also in vorteilhafter Weise vereinfacht werden. Alle Funktionsteile des Sicherheitsgurtsystems können außerhalb des Fahrzeuges vormontiert, justiert und endgültig befestigt werden, da das Trägerelement des erfindungsgemäßen Strukturelements alle Lasten des Sicherheitsgurtsystems aufnehmen kann. Am Fahrzeug ist nur noch die komplette Einheit einzubauen, die mit wenigen Schrauben oder einer Kombination aus Schrauben, Kleben oder Einstecken befestigt werden kann. Durch die Erfindung können einerseits aufgrund der verkürzten Endmontagezeit Kosten gespart werden. Andererseits lassen sich damit auch Qualitätsverbesserungen erzielen, da mit der geringeren Anzahl von Schnittstellen auch die Wahrscheinlichkeit von Endmontagefehlem verringert ist und weniger Toleranzen auftreten können. Zusätzlich erscheint dabei der größere Rohbau-Ausschnitt vor Einsetzen des B-Säulen-Moduls als besonders vorteilhaft, weil eine bessere Zugänglichkeit für den Einbau anderer Baugruppen (wie z.B. Cockpit, Sitze, Dachhimmel) erreicht wird. Zudem bietet die Erfindung neue Möglichkeiten für das Design im Bereich der B-Säule.

## Patentansprüche

1. Strukturelement (10; 110) zur Montage an einer Fahrzeugstruktur, insbesondere im Bereich der B-Säule, mit einem lasttragenden Trägerelement (16; 116), Verkleidungsteilen (14; 114a, 114b) und Funktionsteilen eines Sicherheitsgurtsystems, die am Trägerelement befestigt sind.

2. Strukturelement nach Anspruch 1, **dadurch gekennzeichnet, daß** die am Trägerelement (16; 116) befestigten Funktionsteile des Sicherheitsgurtsystems aus wenigstens einer der Komponenten höhenverstellbarer Umlenkbeschlag (20; 120), Gurtaufroller (18; 118), Gurtstrammer und Befestigungslasche (22; 122) bestehen.

3. Strukturelement nach Anspruch 1 oder 2, **dadurch gekennzeichnet, daß** an der Fahrzeugstruktur Fixiermittel (38) vorgesehen sind, welche das Strukturelement in einer Ebene senkrecht zur Montagerichtung festlegen.

4. Strukturelement nach einem der vorhergehenden Ansprüche, **dadurch gekennzeichnet, daß** die Verkleidungsteile (114a, 114b) vom Trägerelement (116) abklappbar sind.

5. Strukturelement nach einem der vorhergehenden Ansprüche, **dadurch gekennzeichnet, daß** die Verkleidungsteile am Trägerelement durch Verschieben einrastbar sind.

6. Strukturelement nach einem der vorhergehenden Ansprüche, **dadurch gekennzeichnet, daß** das Trägerelement (116) die gesamte B-Säule bildet.

7. Strukturelement nach Anspruch 6, **dadurch gekennzeichnet, daß** es mittels Befestigungselementen (157) von der Fahrzeuginnenseite her montierbar ist.

8. Strukturelement nach einem der vorhergehenden Ansprüche, **dadurch gekennzeichnet, daß** es mittels Befestigungselementen (42; 156) von der Fahrzeugaußenseite her montierbar ist.

9. Fahrzeugstruktur insbesondere eines Personenkraftwagens mit einem ein lasttragendes Trägerelement (116), Verkleidungsteile (114) und am Trägerelement befestigte Funktionsteile eines Sicherheitsgurtsystems umfassenden Strukturelement, **dadurch gekennzeichnet, daß** das Trägerelement die gesamte B-Säule bildet (110), und daß die außerhalb des Fahrzeugs vormontierbare B-Säule Befestigungselemente (156, 157) zu ihrer Befestigung zwischen einem Dachrahmen (112) und einem seitlichen Längsträger (113) des Fahrzeugs bei dessen Endmontage aufweist.

10. Fahrzeugstruktur nach Anspruch 9, **dadurch gekennzeichnet, daß** die Befestigungselemente (156, 157) durch Schraub-, Steck-, Rast- oder Klebeverbindungen gebildet sind.

11. Fahrzeugstruktur nach Anspruch 9 oder 10, **dadurch gekennzeichnet, daß** die Stimflächen des Trägerelements (116) an die Querschnitte von Dachrahmen (112) und seitlichem Längsträger (113) angepaßt sind.

12. Fahrzeugstruktur nach einem der Ansprüche 9 bis 11, **dadurch gekennzeichnet, daß** die an der B-Säule (110) vorfixierten Verkleidungsteile (114) nach der Endmontage die Übergänge zwischen Fahrzeugstruktur und B-Säule (110) sowie gegebenenfalls noch sichtbare Befestigungselemente (156) zur Fahrzeuginnenseite hin abdecken.

13. Verfahren zur Montage einer Fahrzeugstruktur vorzugsweise eines Personenkraftwagens bei welchem Funktionsteile eines Sicherheitsgurtsystems und Verkleidungsteile (114) an einem lasttragenden Trägerelement (116) befestigt werden, **dadurch gekennzeichnet, daß** das Trägerelement (116) unter Bildung der gesamten B-Säule (110) außerhalb des Fahrzeugs vormontiert wird, und daß vor dem Einsetzen der B-Säule sperrige Innenausstattungsteile wie Cockpit, Sitze oder Dachhimmel durch die von der B-Säule freigehaltene Karosserieöffnung (202) hindurch in das Fahrzeuginnere verbracht werden.

14. Verfahren nach Anspruch 13, **dadurch gekennzeichnet, daß** die Funktionsteile des Sicherheitsgurtsystems außerhalb des Fahrzeugs an dem Trägerelement (116) vormontiert, justiert und endgültig befestigt werden.

15. Verfahren nach Anspruch 13 oder 14, **dadurch gekennzeichnet, daß** die komplette B-Säule (110) vorzugsweise durch Schrauben, Kleben und/oder Einstecken zwischen einem Dachrahmen (112) und einem seitlichen Längsträger (113) des Fahrzeugs bei dessen Endmontage befestigt wird.

16. Verfahren nach einem der Ansprüche 13 bis 15, **dadurch gekennzeichnet, daß** die B-Säule (110) beim Einbau in die Fahrzeugkarosserie (200) in der für ihren Einbau vorgesehenen Öffnung (202) seitlich verschwenkt wird, so daß die fest vormontierten Verkleidungsteile (114) im Einbauzustand die Übergänge zur Fahrzeugstruktur fahrzeuginnenseitig überdecken.

17. Verfahren nach einem der Ansprüche 13 bis 15, **dadurch gekennzeichnet, daß** die B-Säule (110) durch endseitigen Ansetzen eines ihrer Säulenenden (206) und nachfolgendes Beischwenken des anderen Säulenendes in Y-Richtung des Fahrzeugs in die Fahrzeugkarosserie (200) eingesetzt wird.

## Claims

1. A structural element (10; 110) for assembly on,a vehicle structure, particularly in the region of the B-pillar, having a load-bearing support element (16; 116), covering parts (14; 114a, 114b) and functional parts of a safety belt system, which are fastened to the support element.

2. A structural element according to Claim 1, **characterised in that** the functional parts of the safety belt system which are fastened to the support element (16; 116) comprise at least one of the components of a height-adjustable deflector fitting (20; 120), belt winder (18; 118), belt tightener and fastening attachment (22; 122).

3. A structural element according to Claim 1 or 2, **characterised in that** fixing means (38) are provided on the vehicle structure, which fix the structural element in a plane perpendicular to the assembly direction.

4. A structural element according to one of the preceding claims, **characterised in that** the covering parts (114a, 114b) can be folded away from the support element (116).

5. A structural element according to one of the preceding claims, **characterised in that** covering parts on the support element can be latched in by displacement.

6. A structural element according to one of the preceding claims, **characterised in that** the support element (116) forms the entire B-pillar.

7. A structural element according to Claim 6, **characterised in that** it can be assembled from inside the vehicle by means of fastening elements (157).

8. A structural element according to one of the preceding claims, **characterised in that** it can be assembled from outside the vehicle by means of fastening elements (42; 156).

9. A vehicle structure, particularly a motor car having a load-bearing support element (116), covering parts (114) and functional parts of a structural element comprising a safety belt system, said functional parts being fastened to the support element, **characterised in that** the support element forms the entire B-pillar (110) and **in that** the B-pillar which can be pre-assembled outside the vehicle has fastening element (156, 157) for fastening it between a roof frame (112) and a lateral longitudinal support (113) of the vehicle during its final assembly.

10. A vehicle structure according to Claim 9, **characterised in that** the fastening elements (156, 157) are formed by screw, push-in, latching or adhesive connections.

11. A vehicle structure according to Claim 9 or 10, **characterised in that** the end faces of the support elements (116) are adapted to the cross-sections of the roof frame (112) and the lateral longitudinal support (113).

12. A vehicle structure according to one of Claims 9 to 11, **characterised in that**, after the final assembly, the transition regions between the vehicle structure and the B-pillar (110) and any fastening elements (156) which may still be visible are covered to the inside of the vehicle by the covering parts (114) which are prefixed to the B-pillar (110).

13. A process for assembling a vehicle structure, preferably of a motor car, in which functional parts of a safety belt system and covering parts (114) are fastened to a load-bearing support element (116), **characterised in that** the support element (116) is pre-assembled outside the vehicle to form the entire B-pillar (110), and **in that**, before the B-pillar is inserted, bulky interior fittings such as the centre console, seats or roof lining are brought into the vehicle interior through the body opening (202) which is free of the B-pillar.

14. A process according to Claim 13, **characterised in that** the functional parts of the safety belt system are pre-assembled on the support element (116), adjusted and finally fastened outside the vehicle.

15. A process according to Claim 13 or 14, **characterised in that** screwing, adhesive and/or pushing-in procedures are preferably used to fasten the complete B-pillar (110) between a roof frame (112) and a lateral longitudinal support (113) of the vehicle during its final assembly.

16. A process according to one of Claims 13 to 15, **characterised in that**, during its installation in the vehicle body (200), the B-pillar (110) is pivoted laterally in the opening (202) provided for its installation so that, in the installed condition, the fixedly pre-assembled covering parts (114) cover the transition regions into the vehicle structure on the inside of the vehicle.

17. A process according to one of Claims 13 to 15, **characterised in that** the B-pillar (100) is inserted into the vehicle body (200) by attaching the end face of one of its pillar ends (206) and subsequently pivoting the other pillar end in the Y-direction of the vehicle.

## Revendications

1. Élément structurel (10 ; 110) à monter sur une structure de véhicule, notamment dans la région du montant B, avec un élément (16 ; 116) porteur de charge, des éléments d'habillage (14; 114a, 114b) et des éléments fonctionnels d'un système de ceinture de sécurité qui sont fixés sur l'élément porteur.

2. Élément structurel selon la revendication 1, **caractérisé en ce que** les éléments fonctionnels du système de ceinture de sécurité qui sont fixés sur l'élément porteur (16 ; 116) sont constitués d'au moins un des composants suivants : ferrure de renvoi (20 ; 120) réglable en hauteur, enrouleur de ceinture (18 ; 118), tendeur de ceinture et patte de fixation (22 ; 122).

3. Élément structurel selon la revendication 1 ou 2, **caractérisé en ce que** des moyens (38) de fixation en position sont prévus sur la structure de véhicule, qui fixent l'élément structurel en position dans un plan perpendiculaire à la direction de montage.

4. Élément structurel selon l'une des revendications précédentes, **caractérisé en ce que** les éléments d'habillage (1 14a, 114b) peuvent être écartés de l'élément porteur (116) par rabattement.

5. Élément structurel selon l'une des revendications précédentes, **caractérisé en ce que** les éléments d'habillage peuvent être enclenchés sur l'élément porteur par coulissement.

6. Élément structurel selon l'une des revendications précédentes, **caractérisé en ce que** l'élément porteur (116) constitue la totalité du montant B.

7. Élément structurel selon la revendication 6, **caractérisé en ce qu'**il peut être monté de l'intérieur du véhicule au moyen d'éléments de fixation (157).

8. Élément structurel selon l'une des revendications précédentes, **caractérisé en ce qu'**il peut être monté de l'extérieur du véhicule au moyen d'éléments de fixation (42 ; 156).

9. Structure de véhicule, notamment d'une voiture particulière, avec un élément structurel comprenant un élément (116) porteur de charge, des éléments d'habillage (114) et des éléments fonctionnels d'un système de ceinture de sécurité qui sont fixés sur l'élément porteur, **caractérisée en ce que** l'élément porteur constitue la totalité du montant B (110) et **en ce que** le montant B, qui peut être pré-assemblé en dehors du véhicule, présente des éléments de fixation (156, 157) pour sa fixation entre un cadre de toit (112) et un longeron latéral (113) du véhicule lors du montage final de ce dernier.

10. Structure de véhicule selon la revendication 9, **caractérisée en ce que** les éléments de fixation (156, 157) sont formés par des assemblages par vissage, à emboîtement, à enclenchement ou par collage.

11. Structure de véhicule selon la revendication 9 ou 10, **caractérisée en ce que** les faces frontales de l'élément porteur (116) sont adaptées aux sections transversales du cadre de toit (112) et du longeron latéral (113).

12. Structure de véhicule selon l'une des revendications 9 à 11, **caractérisée en ce que** les éléments d'habillage (114) pré-immobilisés sur le montant B (110) recouvrent vers l'intérieur du véhicule, à la suite du montage final, les transitions entre la structure de véhicule et le montant B (110) ainsi que des éléments de fixation (156) éventuellement encore visibles.

13. Procédé de montage d'une structure de véhicule, de préférence d'une voiture particulière, selon lequel des éléments fonctionnels d'un système de ceinture de sécurité et des éléments d'habillage (114) sont fixés sur un élément (116) porteur de charge, **caractérisé en ce que** l'élément porteur (116) est pré-assemblé en dehors du véhicule en formant la totalité du montant B (110), et **en ce que**, avant la mise en place du montant B, des éléments volumineux d'équipement intérieur tels que le poste de conduite, des sièges ou l'habillage de plafond sont amenés à l'intérieur du véhicule en passant par l'ouverture de carrosserie (202) dégagée par le montant B.

14. Procédé selon la revendication 13, **caractérisé en ce que** les éléments fonctionnels du système de ceinture de sécurité sont, en dehors du véhicule, pré-assemblés, ajustés et définitivement fixés sur l'élément porteur (116).

15. Procédé selon la revendication 13 ou 14, **caractérisé en ce que** le montant B complet (110) est de préférence fixé par vissage, collage et/ou emboîtement entre un cadre de toit (112) et un longeron latéral (113) du véhicule lors du montage final de ce dernier.

16. Procédé selon l'une des revendications 13 à 15, **caractérisé en ce que** le montant B (110), lors de son installation dans la carrosserie (200) du véhicule, est pivoté latéralement dans l'ouverture (202) prévue pour son installation, de sorte que les éléments d'habillage (114) fixement pré-assemblés recouvrent vers l'intérieur du véhicule, dans l'état installé, les transitions vers la structure de véhicule.

17. Procédé selon l'une des revendications 13 à 15, **caractérisé en ce que** le montant B (110) est installé dans la carrosserie (200) du véhicule en mettant en place d'un côté une de ses extrémités (206) de montant, puis en faisant pivoter l'autre extrémité du montant dans la direction Y du véhicule.
